# EUROPEAN PATENT APPLICATION

(11) **EP 4 725 913 A1**
(43) Date of publication of application: **15.04.2026**
(21) Application number: 24819315.3
(22) Date of filing: 04.06.2024
(51) Int. Cl.: C02F 1/20, B01D 19/00, C02F 1/34

(54) **CARBON DIOXIDE RECOVERY DEVICE AND CARBON DIOXIDE RECOVERY METHOD**

(30) Priority: 07.06.2023 JP 2023094138; 07.05.2024 JP 2024075197
(71) Applicant: Canon Kabushiki Kaisha, Tokyo, 146-8501 (JP)
(72) Inventor: SUZUKI, Norihiro, Tokyo 146-8501 (JP); AOTANI, Takaharu, Tokyo 146-8501 (JP); SAKAKIBARA, Teigo, Tokyo 146-8501 (JP)
(74) Representative: Canon Europe Limited
(86) International application number: PCT/JP2024/020355
(87) International publication number: WO 2024/253086

(57) **Abstract**

There is provided a carbon dioxide capture apparatus and a carbon dioxide capture method that capture carbon dioxide in liquid at low cost. A carbon dioxide capture apparatus includes a storage unit including a partition wall separating an atmosphere and an inner space, the storage unit being configured to store liquid in which carbon dioxide is dissolved in the inner space, a vibration transmission unit configured to transmit a vibration of the storage unit or a vibration source disposed near the storage unit to the liquid stored in the storage unit, and an accumulation unit configured to capture and accumulate the carbon dioxide released from the liquid with an aid of the vibration transmitted via the vibration transmission unit.

## Description

### Technical Field

The present disclosure relates to a carbon dioxide capture apparatus and a carbon dioxide capture method that capture carbon dioxide from liquid at low cost.

### Background Art

As a countermeasure against global warming, there is a worldwide demand for a reduction in global environmental burdens by reduction of carbon dioxide in the atmosphere. This necessitates the achievement of the following two, a reduction in carbon dioxide emissions, and a reduction in the carbon dioxide concentration in the atmosphere by capturing carbon dioxide present in the atmosphere. The carbon dioxide concentration in the atmosphere is as low as about 400 ppm, and the carbon dioxide concentration cannot be reduced without a method capable of minimizing emission of further carbon dioxide with respect to energy for the capture to reduce the carbon dioxide concentration in the atmosphere.

One possible measure for capturing carbon dioxide without emitting further carbon dioxide is a method that captures carbon dioxide via seawater or freshwater. Carbon dioxide contained in the atmosphere is dissolved in seawater and freshwater, and there is known a method that extracts carbon dioxide from the above-described seawater or freshwater by depressurization.

PTL 1 describes a carbon dioxide removal apparatus for a fish rearing tank, which removes carbon dioxide dissolved in seawater in the fish rearing tank by depressurizing the seawater. More specifically, PTL 1 describes discharging outward carbon dioxide formed into bubbles in a depressurized space and supplying the seawater with the carbon dioxide removed therefrom into the tank for the purpose of removing the carbon dioxide in the seawater.

### Citation List

### Patent Literature

PTL 1: Japanese Patent Laid-Open No. 2003-259759

### Summary of Invention

### Technical Problem

However, the apparatus described in PTL 1 requires the provision of a nozzle as well as a control unit for keeping the inside of the tank in the depressurized state, thereby complicating the apparatus configuration and leading to a cost increase.

The present disclosure is directed to providing a carbon dioxide capture apparatus and a carbon dioxide capture method that capture carbon dioxide in liquid at low cost. Solution to Problem

To solve the above-described issue, a carbon dioxide capture apparatus includes a storage unit including a partition wall separating an atmosphere and an inner space, the storage unit being configured to store liquid in which carbon dioxide is dissolved in the inner space, a vibration transmission unit configured to transmit a vibration of the storage unit or a vibration source disposed near the storage unit to the liquid stored in the storage unit, and an accumulation unit configured to capture and accumulate the carbon dioxide released from the liquid with an aid of the vibration transmitted via the vibration transmission unit.

### Advantageous Effects of Invention

According to the present disclosure, the present disclosure can achieve capture of carbon dioxide in liquid at low cost.

### Brief Description of Drawings

[Fig. 1] Fig. 1 is a schematic view of a carbon dioxide capture apparatus according to a first embodiment of the present disclosure.
[Fig. 2] Fig. 2 is a schematic view of a carbon dioxide capture apparatus according to a second embodiment of the present disclosure.
[Fig. 3] Fig. 3 is a schematic view of a carbon dioxide capture apparatus according to a third embodiment of the present disclosure.
[Fig. 4] Fig. 4 is a schematic view of a carbon dioxide capture apparatus according to a fourth embodiment of the present disclosure.
[Fig. 5] Fig. 5 is a schematic view of a carbon dioxide capture apparatus according to a fifth embodiment of the present disclosure.
[Fig. 6A] Fig. 6A is a schematic view of a carbon dioxide capture apparatus according to a sixth embodiment of the present disclosure.
[Fig. 6B] Fig. 6B is a schematic view of the carbon dioxide capture apparatus according to the sixth embodiment of the present disclosure.
[Fig. 7] Fig. 7 is a schematic view of a carbon dioxide capture apparatus according to a seventh embodiment of the present disclosure.
[Fig. 8] Fig. 8 is a schematic view of a carbon dioxide capture apparatus according to an eighth embodiment of the present disclosure.
[Fig. 9] Fig. 9 is a schematic view of a carbon dioxide capture apparatus according to a ninth embodiment of the present disclosure.

### Description of Embodiments

A carbon dioxide capture apparatus according to one embodiment of the present disclosure captures carbon dioxide by heating or depressurizing liquid in which carbon dioxide is dissolved to capture carbon dioxide in the atmosphere at low cost. Examples of the liquid in which carbon dioxide is dissolved include rainwater, river water, lake water, and seawater. Now, carbon dioxide in the atmosphere is dissolved in freshwater such as rainwater and river water in an equilibrium pressure state. Compared thereto, the solubility of carbon dioxide is further high in seawater. Further, carbon dioxide has such a property that the solubility thereof in water increases at a low temperature and reduces at a high temperature. In addition, the solubility of carbon dioxide increases as the atmospheric pressure increases, and reduces as the atmospheric pressure reduces.

Carbon dioxide is to be extracted while a large amount of seawater or freshwater is supplied into and discharged from the apparatus to reduce carbon dioxide in the atmosphere as a countermeasure against global warming. Carbon dioxide is desirably extracted by depressurizing the seawater or freshwater to capture carbon dioxide from the seawater or freshwater with low energy.

The carbon dioxide capture apparatus according to the present disclosure can capture carbon dioxide at low cost with a simple apparatus configuration. More specifically, the carbon dioxide capture apparatus according to the present disclosure lifts seawater or freshwater, captures carbon dioxide released from a storage unit, and circulates the seawater or freshwater in the apparatus using the siphon principle. Now, for example, the storage unit is a Torricellian vacuum (a vacuum space created in an upper portion according to the liquid lifting), and the Torricellian vacuum refers to a vacuum space created in a space above a height corresponding to a positional limit to which liquid can be lifted by depressurization. The Torricellian vacuum is generally known to be created according to the relationship among the atmospheric pressure, the specific gravity of a solution, and the vapor pressure of the solution, and the Torricellian vacuum is created upon exceedance of approximately 10 m for water at sea level. On the other hand, the depressurization in the storage unit is not essential, and the storage unit may be configured to release the carbon dioxide with the aid of heating using a heating mechanism.

One embodiment of the carbon dioxide capture apparatus according to the present disclosure is configured to release the carbon dioxide dissolved in the seawater or the freshwater to the Torricellian vacuum as gas, thereby being able to discharge the carbon dioxide using a vacuum pump to capture it into a capture tank. Further, the carbon dioxide capture apparatus according to the present disclosure utilizes, for example, the siphon principle to circulate the lifted seawater or freshwater in a depressurized state within the apparatus. The method for the circulation in the apparatus is not limited only to the siphon principle, and may be realized by another known technique as long as it is a mechanism that circulates liquid.

In the carbon dioxide capture apparatus according to the present disclosure, the pressure density of liquid in a liquid supply path due to its own weight and the pressure density of liquid in a liquid discharge path match each other, provided that the respective positional heights of the liquid supply path and the liquid discharge path match each other. This means that, if the liquid level of the liquid supply surface is higher than the liquid level of the liquid discharge surface, the liquid can flow from the liquid supply side toward the liquid discharge side due to positional energy even without a motive power assist such as a water-jet pump. Further, even when the liquid supply surface and the liquid discharge surface are in the same height relationship, applying a slight motive power assist using a water-jet pump allows the liquid to be circulated within the apparatus.

The carbon dioxide capture apparatus according to the present disclosure allows the carbon dioxide to be captured with low energy in the carbon dioxide capture apparatus by employing the above-described configuration and method. Further, as a method for shortening a reaction time for extracting the carbon dioxide dissolved in the liquid as gas, the present disclosure further transmits a vibration to the liquid, i.e., applies vibration, thereby being able to capture the carbon dioxide from the liquid at low cost. Further, this vibration can be applied by employing a method that applies vibration by transmitting to liquid a vibration generated on a device serving as a vibration source, which is not originally provided for the purpose of generating the vibration.

More specifically, the carbon dioxide capture apparatus according to the present disclosure is characterized in the following manner. The carbon dioxide capture apparatus according to the present disclosure includes a storage unit including a partition wall separating an atmosphere and an inner space and configured to store liquid in which carbon dioxide is dissolved in the above-described inner space. Further, the carbon dioxide capture apparatus according to the present disclosure further includes a vibration transmission unit configured to transmit a vibration of the storage unit or a vibration source disposed near the above-described storage unit to the liquid stored in the storage unit. Further, the carbon dioxide capture apparatus according to the present disclosure includes an accumulation unit configured to capture the above-described carbon dioxide released from the liquid with the aid of the vibration transmitted via the vibration transmission unit and accumulate it, thereby capturing the carbon dioxide at low cost.

In the following description, the present disclosure will be described in detail referring to embodiments thereof. The present disclosure is not limited to the embodiments that will be described below, and the scope of the present disclosure also includes a modification, an improvement, and the like made to the following embodiments based on ordinary knowledge of those skilled in the art within a range that does not depart from the spirit of the present disclosure.

### [First Embodiment]

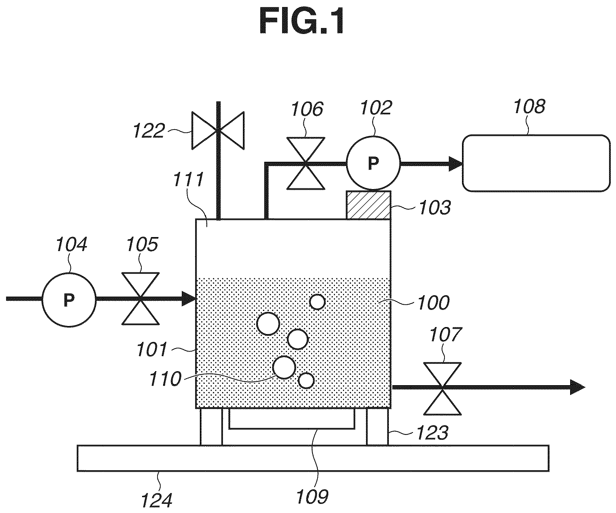

In the following description, an example of a function and configuration of a carbon dioxide capture apparatus according to the present disclosure will be described with reference to Fig. 1.

Liquid 100 in which carbon dioxide in the atmosphere is dissolved is injected into a CO2 release tank (storage unit) 101 via an injection valve 105 using an injection pump 104. A liquid discharge valve 107 is closed, and a space 111 is created by adjusting the liquid injection amount of the liquid 100 in the CO2 release tank (storage unit) 101. Then, the injection valve 105 is closed after the injection is completed.

Next, a valve 106 is opened and the inside of the CO2 release tank (storage unit) 101 is depressurized using a vacuum pump 102. The inside of the CO2 release tank (storage unit) 101 is depressurized to reach 2kPa in the present embodiment, but may be depressurized to a higher pressure not exceeding the atmospheric pressure, and this example shall not limit the degree of vacuum.

Then, the vacuum pump 102 is physically connected to the CO2 release tank (storage unit) 101 via a vibration transmission unit 103. Then, a vibration accompanying an exhaust operation of the vacuum pump 102 serving as the vibration source is transmitted to the liquid in the storage unit via the vibration transmission unit 103. More specifically, the vibration is transmitted to the liquid 100 in the CO2 release tank (storage unit) 101 via and the CO2 release tank (storage unit) 101. In other words, the vibration of the vibration source disposed near the storage unit 101 is transmitted to the liquid stored in the storage unit 101 via the vibration transmission unit 103.

Now, the liquid 100 is in such a state that the carbon dioxide is dissolved in an amount exceeding that under the pressure equilibrium due to the depressurization, and the carbon dioxide is released from the liquid 100 into the storage unit 101. Further, the carbon dioxide is changed from the liquid 100 into bubbles 110 due to the vibration generated by the vacuum pump 102 and is released into the space 111. The carbon dioxide released into the space 111 is captured from the release tank 101 using the vacuum pump 102 and is reserved into a CO2 reservoir unit (accumulation unit) (accumulation unit) 108.

The duration to depressurize the liquid 100 is set to three minutes in the present embodiment, but this example shall not limit the depressurization duration, and the capture rate of carbon dioxide from the liquid 100 by the carbon dioxide capture apparatus is improved by increasing the depressurization duration. However, the increase in the depressurization duration leads to a reduction in the amount of carbon dioxide remaining in the liquid 100, thereby leading to a reduction in the amount of carbon dioxide that can be captured per unit time.

In the present embodiment, after the liquid 100 is depressurized for a desired depressurization duration, the valve 106 is closed and the vacuum pump 102 is stopped. An atmospheric leak valve 122 is opened to cause the space 111 to reach the atmospheric pressure, and the liquid discharge valve 107 is opened to discharge the liquid 100 in the CO2 release tank (storage unit) 101. The liquid discharge valve 107 is closed after the liquid 100 in the CO2 release tank (storage unit) 101 is discharged. These operations constitute a series of carbon dioxide capture operations. The carbon dioxide in the atmosphere is captured by repeating the above-described series of operations.

Seawater is used as the liquid 100 in which carbon dioxide is dissolved in the present embodiment, but the liquid 100 is not limited thereto as long as it is liquid in which carbon dioxide in the atmosphere is dissolved, and may be rainwater, river water, lake water, or tap water.

Alternatively, the liquid 100 may be a basic aqueous solution or fluorine-based active liquid, and carbon dioxide in the atmosphere may be captured by exposing such liquid to the atmosphere. Further, it is also conceivable to construct a circulation-system apparatus that captures CO2 in the collected liquid using the capture apparatus according to the present embodiment, and reuses the liquid 100 from which the carbon dioxide is already captured to further capture carbon dioxide in the atmosphere.

The liquid 100 may be a basic aqueous solution to capture CO2, and examples of a basic substance include sodium hydroxide, ammonia, and amines (primary amines, secondary amines, and tertiary amines), which may be directly used or used in the form of a solution. Alternatively, the liquid 100 may be a solution of salt such as sodium hydrogen carbonate, which exhibits basicity when being dissolved. Further, a borate salt or phosphate buffer solution, or trishydroxymethylaminomethane (tris) may be used as a buffer solution to suppress a rapid change in pH along with the capture of CO2. Fluorine-based active liquid having high CO2 solubility can be used to capture carbon dioxide highly efficiently. Further, the fluorine-based active liquid having high CO2 solubility is characterized by being selected from fluorocarbons that may have a substituent in view of viscosity and may have a branch structure and/or a cyclic structure. Examples thereof include perflubron, perfluorodecalin, Fluorinert FC-3283, perfluorobutylperfluorotetrahydrofuran, perfluoro-1-isopropoxyhexane, perfluoro-1,4-diisopropoxybutane, and hydrofluoroether (Novec 7100 or Novec 7300). However, these examples shall not limit the scope of the present disclosure. Further, it is also helpful to mix another liquid to adjust the physical properties of the liquid.

The vacuum pump 102 used in the present embodiment is a vacuum pump driven by an induction motor that operates under a commercial power source of a single-phase 100V at 50Hz. When the vibration of the vacuum pump 102 serving as the vibration source was measured, a large vibration was acquired at several Hz or higher, and peaks in vibration amplitude were observed near 25Hz and 50Hz.

The motor to be employed can be a power-saving brushless motor, and a common control frequency is in a range of approximately several kHz to 10 kHz. A driving current of the brushless motor is generated by power-amplifying a digital waveform derived from a pulse width modulation (PWM) signal generated at the above-described driving frequency using a power transistor or a field effect transistor (FET), and converting it into an analog current waveform using a low-pass filter. A high frequency component failing to be completely removed by the above-described low-pass filter may remain in the driving current waveform depending on the driving circuit configuration, and this affects the vibration generated by the motor. Therefore, a large vibration can be acquired in a range of around several Hz to 10 kHz according to the above-described rotational speed and structure with the control frequency additionally reflected therein as the vibration frequency range of the pump.

The maximum rotational speed is 6000 rpm for most of common brushless motors, and the rotational frequency of the motor alone is 100 Hz or lower in the case of this rotational speed. Further, the vibration may be generated by performing control of making the rotational speed of the motor uneven. For example, the motor driving current may be controlled so as to increase a vibration due to cogging of the brushless motor. Regarding the vibration due to cogging, for example, most of motors driven with three-phase currents are a product constituted by about five sets of three-phase coils, and a vibration is generated due to cogging around 15 times per rotation of the motor. Because there is a wide variety of types for the configuration of the brushless motor, the above-described coil configuration is merely an example.

Further, the generated vibration frequency varies depending on the structures of a gear and a screw forming the pump. For example, the pump may be configured in such a manner that a part of the pump structure generates a vibration at a high frequency as a gear structure that rotates at a high speed. Vibration energy is generally known to increase according to an increase in the frequency for the same amplitude, and the present example shall not limit the vibration frequency as long as the vibration can facilitate the formation of the bubbles 110 from the liquid 100.

The vibration transmission unit 103 according to the present embodiment is formed using an iron metal member. The vacuum pump 102 serving as the vibration source and the CO2 release tank (storage unit) 101 are fixed using the above-described metal member. The vibration transmission unit 103 may be another member that can transmit the vibration of the vacuum pump 102 serving as the vibration source to the liquid 100, and is not limited to the above-described iron metal member and may be made from, for example, stainless steel (SUS), an alloy of aluminum or copper, or a resin material. Further, the vibration transmission unit 103 may be an exhaust pipe for depressurizing the inside of the CO2 release tank (storage unit) 101, or an apparatus platform 124 may be used as the vibration transmission unit 103 by installing the vacuum pump 102 on the apparatus platform 124.

The CO2 release tank (storage unit) 101 is supported on a mounting portion such as the apparatus platform 124 via an elastic portion 123, thereby being structured to easily vibrate. The elastic portion 123 is formed using a rubber member in the present embodiment, but may be a structure made from metal, resin, or a wood material having a spring property, or a damper structure. Further, the mounting portion is not limited to a platform, and may be the ground or the like.

Further, the liquid 100 in the storage unit 101 may be heated by a heating unit 109, which is formed from a heating mechanism, in the carbon dioxide capture apparatus. The heating unit 109 can be a heat source that does not newly emit carbon dioxide to the atmosphere for the heating, and can be, for example, utilization of industrial waste heat, utilization of energy based on sunlight, geothermal utilization, or utilization of green electricity. The liquid 100 containing carbon dioxide in the atmospheric pressure equilibrium state releases the carbon dioxide in reaction to not only depressurization but also an increase in the solution temperature, thereby being desirably subjected to heating together with the depressurization.

### [Second Embodiment]

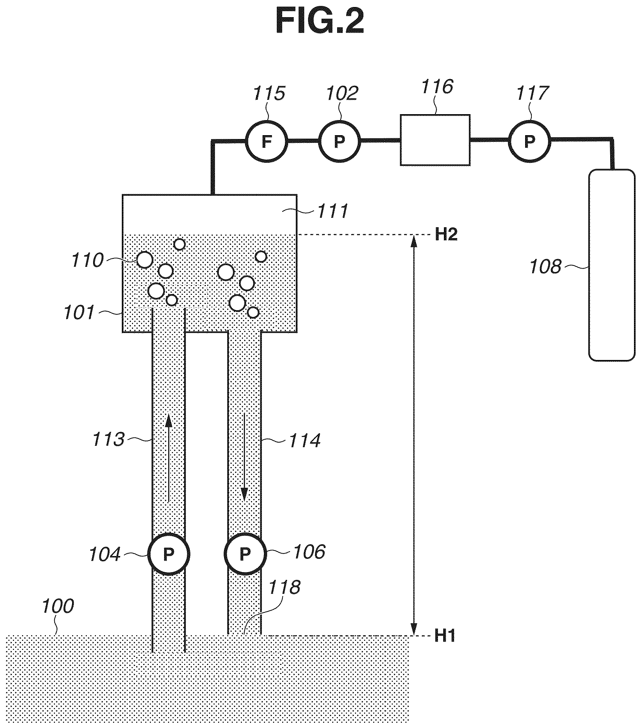

In the following description, an example of a function and configuration of a carbon dioxide capture apparatus according to the present disclosure will be described with reference to Fig. 2.

The second embodiment will be described mainly focusing on differences from the first embodiment. In the present embodiment, seawater is used as the liquid 100 in which carbon dioxide is dissolved, and the CO2 release tank (storage unit) 101 is installed in such a manner that a lifting height H2 of the liquid 100 in the CO2 release tank (storage unit) 101 from a sea level H2 is a height of approximately 10 m. The liquid 100 is lifted along an arrowed flow into the CO2 release tank (storage unit) 101 via a liquid supply pipe 113 using the lifting pump 104.

Along therewith, the inside of the CO2 release tank (storage unit) 101 is depressurized using the vacuum pump 102. The liquid 100 lifted from a liquid supply port is stored in the CO2 release tank (storage unit) 101 by a liquid amount based on the shape of the CO2 release tank (storage unit) 101 and the lifting height H2.

In the carbon dioxide capture apparatus according to the present embodiment, the lifted liquid 100 is discharged from a liquid discharge port 118 as an arrowed flow using a liquid discharge pipe 114 and the liquid discharge pump 106. In the present embodiment, the space 111 is depressurized to reach 2 kPa. Further, the height relationship between the liquid supply pipe 113 and the liquid discharge pipe 114 in the CO2 release tank (storage unit) 101 is desirably such a height relationship that the liquid 100 in which the remaining carbon dioxide concentration reduces is discharged, and this varies depending on the liquid 100 as a solvent and therefore the present example shall not limit the height relationship.

In the present embodiment, the carbon dioxide capture apparatus is configured to discharge the liquid 100 using the liquid discharge pump 106. An upper limit on the lifting height is determined with respect to the lifting height H2 based on a principle called "Torricellian vacuum height", and the lifting height H2 is approximately 10 m when seawater at sea level is lifted. The Torricellian vacuum height is determined based on the relationship among the vapor pressure of the liquid 100, the weight density of the liquid 100, and the atmospheric pressure at the sea level H1. In other words, the carbon dioxide capture apparatus according to the present embodiment includes the liquid supply pipe 113 structured to reduce a flow amount in a liquid supply path for supplying the liquid 100 to the storage unit 101, and includes the liquid discharge pipe 114, which is a liquid discharge mechanism for discharging the liquid 100 from the storage unit 101. Further, the carbon dioxide capture apparatus according to the present embodiment is characterized in that the height of the liquid level of the liquid in the storage unit 101 is lower than the Torricellian vacuum height in the storage unit. The above-described height of the liquid level of the liquid 100 varies depending on the atmospheric pressure, the temperature of the liquid 100, the degree of vacuum inside the CO2 release tank (storage unit) 101, and the constituent elements of the liquid 100.

Further, in a case where the lifting height H2 is the Torricellian vacuum height, the liquid 100 is discharged due to the weight of the liquid 100 even without the liquid discharge pump 106, and therefore the carbon dioxide capture apparatus may be configured not to include the liquid discharge pump 106. Further, in the case where the liquid 100 is supplied and discharged using both the lifting pump 104 and the liquid discharge pump 106, the lifting height H2 can be any height equal to or lower than the Torricellian vacuum height. Alternatively, the lifting height H2 may be adjusted by reducing the liquid supply flow amount of the liquid 100 using a flow amount reduction mechanism and discharging the liquid using the liquid discharge pump 106.

The above-described flow amount reduction mechanism may be any mechanism capable of increasing resistance against a flow of water to be supplied, and may be, for example, a configuration that provides a flow amount adjustment valve to the liquid supply pipe 113 or a configuration that reduces the diameter of the liquid supply pipe 113.

In the case where the lifting height H2 is set to the Torricellian vacuum height, the liquid 100 may be discharged using the liquid discharge pump 106. More specifically, even when the carbon dioxide capture apparatus is configured not to include the lifting pump 104, the liquid 100 is lifted due to the relationship between the pressure in the CO2 release tank (storage unit) 101 and the atmospheric pressure received by the liquid 100. Therefore, desirably, the carbon dioxide capture apparatus is configured to include any one of the lifting pump 104 and the liquid discharge pump 106 from the power saving perspective.

The circulation of the liquid 100 inside the apparatus according to the present embodiment is circulation based on the siphon principle, and therefore only a small amount of lifting is required, for example, when circulating the liquid 100 by lifting the liquid using the lifting pump 104, thereby realizing circulation with low pump driving power.

The carbon dioxide released into the depressurized space 111 is captured by the vacuum pump 102 via a water vapor filter 115, and is temporarily pooled in a carbon dioxide buffer tank 116 and is then reserved into the CO2 reservoir unit (accumulation unit) 108 by a pressurizing pump 117. In the present embodiment, the captured carbon dioxide is reserved in the CO2 reservoir unit (accumulation unit) 108 under a pressure equal to or higher than the atmospheric pressure.

In the present embodiment, the liquid supply pipe 113 is used as the vibration transmission unit that transmits the vibration of the lifting pump 104 serving as the vibration source to the liquid 100 in the CO2 release tank (storage unit) 101. Along therewith, the liquid discharge pipe 114 is used as the vibration transmission unit that transmits the vibration of the liquid discharge pump 106. The liquid supply pipe 113 and the liquid discharge pipe 114 are formed using stainless-steel pipes, but this example shall not limit the material. This configuration causes the vibration of the lifting pump 104 to be transmitted to the liquid supply pipe 113 serving as the vibration transmission unit to thus vibrate the liquid supply pipe, and causes the vibration of the liquid supply pipe 113 to be transmitted to the storage unit 111, thereby causing the carbon dioxide to be released from the liquid in in the storage unit 101. Further, this configuration causes the vibration of the liquid discharge pump 106 to be transmitted to the storage unit 111 due to the vibration of the liquid discharge pipe 114 serving as the vibration transmission unit, thereby causing the carbon dioxide to be further released from the liquid in the storage unit 101. The present embodiment may be configured to cause the vibration of the vacuum pump to function via the vibration transmission unit like the first embodiment, or may be embodied in combination thereof with any of the above-described vibration transmission units as necessary.

The vibration frequencies of the lifting pump and the liquid discharge pump vary depending on the rotational speed of the motor and the structure determined by the number of blades that generate a liquid flow and the like. Vibration energy is generally known to increase according to an increase in the frequency for the same amplitude, and the present example shall not limit the vibration frequency as long as the vibration can facilitate the formation of the bubbles 110 from the liquid 100.

Seawater is used as the liquid 100 in the present embodiment, but the liquid 100 may be another kind of liquid in which carbon dioxide is dissolved, and may be rainwater, river water, lake water, tap water, a basic aqueous solution, or fluorine-based active liquid without being limited to seawater. Further, the present embodiment may be configured as a circulation-system carbon dioxide capture apparatus by being combined with the configuration that captures carbon dioxide in the atmosphere by exposing the liquid 100 to the atmosphere, which has been described in the first embodiment.

### [Third Embodiment]

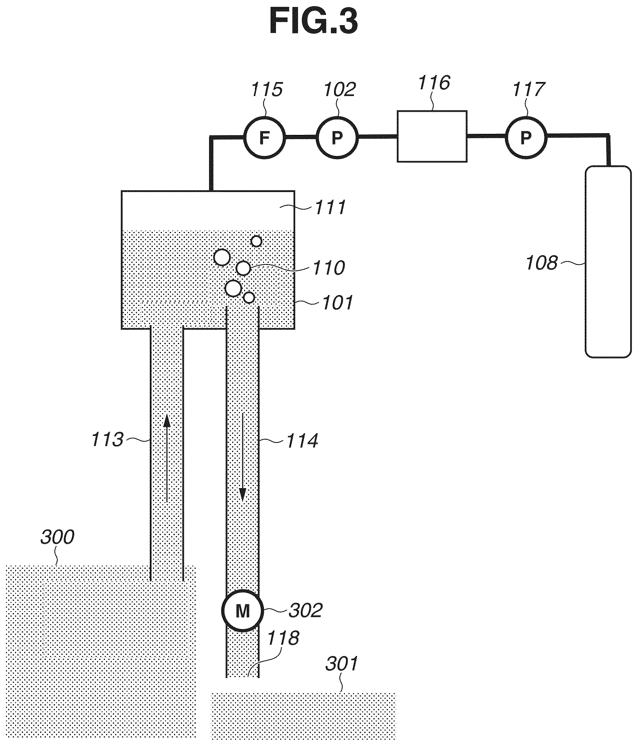

In the following description, an example of a function and configuration of a carbon dioxide capture apparatus according to the present disclosure will be described with reference to Fig. 3.

Especially, the third embodiment will be described mainly focusing on differences from the above-described embodiments. The present embodiment uses river water as liquid 300 in which carbon dioxide is dissolved, and has such a relationship that the height of the liquid discharge port 118, which is a liquid discharge surface, is lower than the height of the surface of the liquid 300, which is a liquid supply surface where a liquid supply port is disposed. Further, the liquid supply port is disposed on a vertically upper side with respect to the liquid discharge port. In the present embodiment, the carbon dioxide capture apparatus is configured in this manner, thereby allowing the supplied liquid 300 to be discharged after being circulated inside the carbon dioxide capture apparatus without requiring a motive power source for creating a flow of the liquid based on the siphon principle. The carbon dioxide capture apparatus is configured in such a manner that the liquid discharge port 118 and discharged liquid 301 are out of contact with each other in the present embodiment, but they may be either in contact or separated as long as the carbon dioxide capture apparatus is configured to allow the liquid to be discharged based on the siphon principle.

A power generator 302, which is a hydroelectric power generator, is installed in the flow path of the liquid discharge pipe 114, and hydroelectric power generation is conducted based on positional energy according to the discharge of the liquid 300. Power generated by the hydroelectric power generator 302 is used as power for a power source of the vacuum pump 102, the pressurizing pump 117, and the apparatus control system. A vibration generated by the power generator 302 is transmitted to the liquid 300 in the storage unit 101 via the liquid discharge pipe 114 serving as the vibration transmission unit. The vibration frequency due to the power generation operation of the power generator 302 varies depending on the number of blades that convert the liquid flow into a rotational motion and the rotational speed of the power generator, but the vibration amplitude and the vibration frequency may be any amplitude and vibration capable of facilitating the formation of the bubbles 110 from the carbon dioxide dissolved in the liquid 300 and are not limited. The material of the liquid discharge pipe 114 is a stainless-steel pipe, but may also be a polyvinyl chloride pipe or an iron pipe, and the present example shall not limit the material.

The height of the liquid level of the liquid 300 varies depending on the atmospheric pressure, the temperature of the liquid 300, the degree of vacuum in the CO2 release tank (storage unit) 101, and the constituent elements of the liquid 300. In the present embodiment, the carbon dioxide capture apparatus is configured in such a manner that the degree of vacuum in the CO2 release tank (storage unit) 101 is approximately 2 kPa, and the height from the surface of the liquid 300 in contact with the atmosphere to the liquid level of the liquid 300 in the CO2 release tank (storage unit) 101 is approximately 10 m. The carbon dioxide capture apparatus is configured to use the liquid discharge pipe 114 having a length of 10 m or longer, thereby being able to acquire positional energy of the liquid 300 sufficient for the power generation by the power generator 302.

### [Fourth Embodiment]

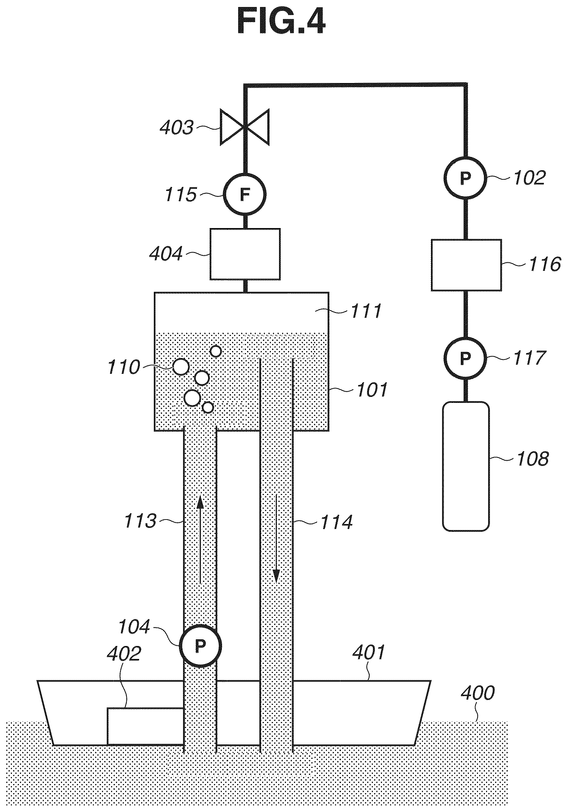

In the following description, an example of a function and configuration of a carbon dioxide capture apparatus according to the present disclosure will be described with reference to Fig. 4.

The present embodiment is configured in such a manner that a mechanism floating on a water surface is added to the configuration of the carbon dioxide apparatus according to the second embodiment. Seawater is used as liquid 400 in which carbon dioxide is dissolved, but the liquid 400 may be freshwater such as river water or lake water. A floating body 401 is, for example, a body of a ship, and includes an engine 402, which is an internal combustion engine intended to sail the ship. In other words, the vibration source in the present embodiment is, for example, a propulsion engine of the ship. The engine 402 may be an engine intended to generate power, and the present example shall not limit the intended use of the engine and the vibration source may be, for example, an engine for power generation. Further, the floating body 401 is assumed to be a ship in the present embodiment, but may be another structure that floats on a water surface and may be, for example, a wind power generator floating on an ocean.

The vibration frequency generated by the engine 402 varies depending on the rotational speed of the internal combustion engine. The vibration generated by the engine 402 is transmitted to the liquid supply pipe 113 and the liquid discharge pipe 114 via the floating body 401, and is transmitted to the liquid 400 in the CO2 release tank (storage unit) 101. In other words, the present embodiment facilitates the release of the carbon dioxide from the liquid 400 in the CO2 release tank (storage unit) 101 with the aid of the vibration generated by the engine 402. The liquid supply pipe 113 and the liquid discharge pipe 114 are used as the vibration transmission units in the present embodiment, but a structure usable as the vibration transmission unit may be additionally provided.

Further, the liquid 400 is seawater, and the floating body 401 is floating on seawater and therefore rocks by a wave force generated due to the weather. The liquid 400 sways in the CO2 release tank (storage unit) 101 due to the rocking floating body 401. The vibration frequency of the ship body under the influence of the wave force is approximately 0.1 Hz to 1 Hz although varying depending on the size and the structure of the ship body. Because the CO2 release tank (storage unit) 101 is installed at a height of approximately 10 m above sea level, the vibration amplitude is largely affected by the wave force, which facilitates the release of the carbon dioxide from the liquid 400 in the CO2 release tank (storage unit) 101. The above-described height of the liquid level of the liquid 400 varies depending on the atmospheric pressure, the temperature of the liquid 400, the degree of vacuum in the CO2 release tank (storage unit) 101, and the constituent elements of the liquid 100.

A buffer tank 404 is provided for the purpose of preventing the vacuum pump 102 from sucking the liquid 400 in the CO2 release tank (storage unit) 101 when the floating body 401 largely rocks under the wave influence, and prevents a small amount of the liquid 400 from flowing into the vacuum pump 102. The CO2 release tank (storage unit) 101 and the buffer tank 404 are configured as separate different tanks in the present embodiment, but the carbon dioxide capture apparatus may be configured in such a manner that a partition plate is provided in the CO2 release tank (storage unit) 101 to form another chamber.

When the floating body 401 largely tilts under the influence of the wave force, a valve 403 is closed to prevent the liquid 400 from flowing into the vacuum pump 102. In the present embodiment, the carbon dioxide capture apparatus is equipped with a sensor that detects a tilt of the ship body and performs control of automatically closing the valve 403 according to a predetermined or more degree of tilt.

The carbon dioxide capture apparatus is configured to transmit heat generated by the engine 402 to the liquid 400 via the liquid supply pipe 113 in the present embodiment, but may be equipped with an additional heat transmission mechanism that transmits the heat generated by the engine 402 to the liquid 400. Heating the liquid 400 facilitates the release of the carbon dioxide from the liquid 400.

### [Fifth Embodiment]

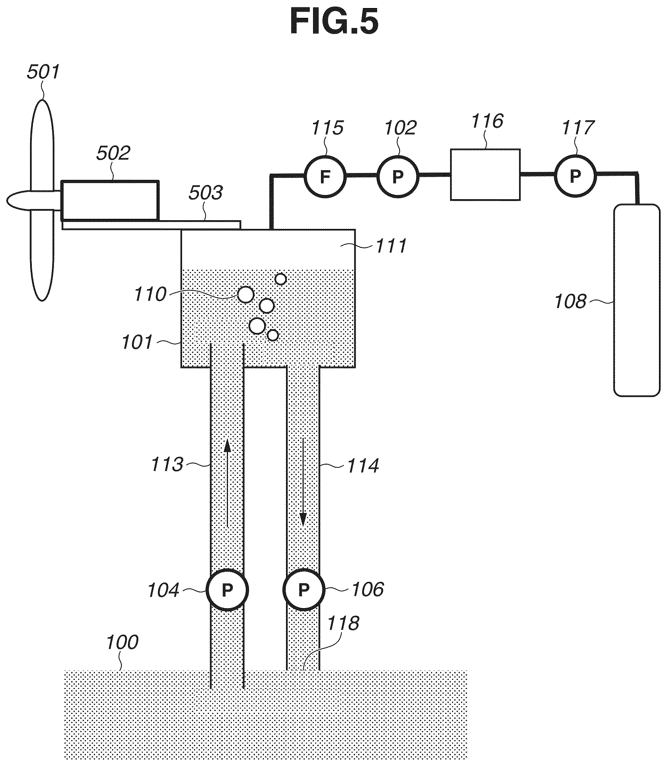

In the following description, an example of a function and configuration of a carbon dioxide capture apparatus according to the present disclosure will be described with reference to Fig. 5.

The present embodiment is a configuration in which a mechanism for generating power using a wind force is added to the configuration according to the second embodiment. The carbon dioxide capture apparatus according to the present embodiment includes a windmill 501, a power generator 502, which generates power using a rotation of the windmill 501, and a vibration transmission unit 503, which transmits a vibration of the power generator to the liquid 400 in the CO2 release tank (storage unit) 101. The material of the vibration transmission unit 503 is an iron member in the present embodiment, but this example shall not limit the material.

The vibration frequency of the power generator 502 varies depending on the rotational speed of the windmill and the structure determined by the number of blades and the like. Wind power generators generate many vibrations in a low frequency region of several tens of Hz or lower. Vibration energy is generally known to increase according to an increase in the frequency for the same amplitude. An increase in the amplitude facilitates the release of the carbon dioxide from the liquid 100. The present example shall not limit the vibration frequency as long as the vibration can facilitate the formation of the bubbles 110 from the liquid 100.

The wind power generator requires a height as a structure for keeping the windmill 501 out of contact with the ground or the like. Therefore, in the present embodiment, the height of the liquid level of the liquid 100 in the CO2 release tank (storage unit) 101 is set to approximately 10 m from the height of the liquid intake surface. The above-described height of the liquid level of the liquid 100 varies depending on the atmospheric pressure, the temperature of the liquid 100, the degree of vacuum in the CO2 release tank (storage unit) 101, and the constituent elements of the liquid 100.

In the present embodiment, the CO2 release tank (storage unit) 101 is installed at a predetermined height using a structure (not illustrated) built on the ground. The CO2 release tank (storage unit) 101 is structured to swing rightward, leftward, forward, and backward with the aid of the elasticity of the above-described structure due to a wind force. The swing of the CO2 release tank (storage unit) 101 generates a vibration of the liquid 100 in the CO2 release tank (storage unit) 101, thereby facilitating the release of the carbon dioxide from the liquid 100. The windmill 501 and the power generator 502 are built near the CO2 release tank (storage unit) 101, but may be built at another location where they can transmit the vibration to the CO2 release tank (storage unit) 101 via the vibration transmission unit 503. For example, the windmill 501 and the power generator 502 may be built around a height of 40 m, and the present example shall not limit the positional relationship. The above-described structure is assumed to be an iron member, but may be made from metal such as stainless steel or aluminum, an alloy thereof, concrete, or a wood material, and the present example shall not limit the material.

Seawater is used as the liquid 100, but the liquid 100 may be fresh water. Further, the configuration according to the present embodiment may be a configuration combined with the floating body 401 described in the fourth embodiment. The carbon dioxide capture apparatus is configured to include two pumps, the lifting pump 104 and the liquid discharge pump 106 in the present embodiment, but the provision of any one of the pumps is sufficient to circulate the liquid 100, and the present example shall not limit the pump configuration.

### [Sixth Embodiment]

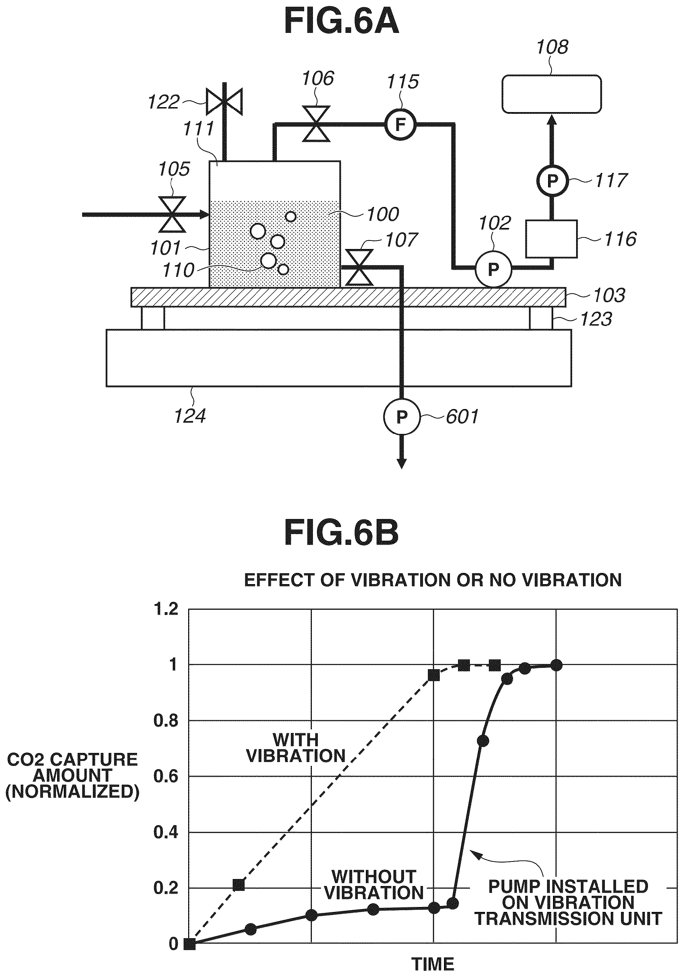

In the following description, an example of a function and configuration of a carbon dioxide capture apparatus according to the present disclosure will be described with reference to Figs. 6A and 6B.

The present embodiment is configured in such a manner that the CO2 release tank (storage unit) 101 and the vacuum pump 102 are installed on the vibration transmission unit 103 as compared with the configuration according to the first embodiment. A model number DA-20D manufactured by ULVAC Incorporated was used as the vacuum pump 102, and a main vibration frequency was obtained with a peak at 50 Hz when the vibration frequency was measured. A top plate of a commonly-used stainless-steel rack for experimental equipment was used as the vibration transmission unit 103, and a resin caster for the rack was used as an elastic portion 123.

Flexible resin pipes were used as pipes connecting the vacuum pump 102 and the water vapor filter 115 and a pipe connecting the vacuum pump 102 and a carbon dioxide buffer tank 116, allowing the installation position of the vacuum pump 102 to be easily changed.

Fig. 6B illustrates a result of measuring time-series changes in two CO2 capture amounts in the case of the installation position of the vacuum pump 102 set on the vibration transmission unit 103 and in the case of the installation position of the vacuum pump 102 set on the apparatus platform 124. For the present embodiment, the time-series change was measured with seawater used as the liquid 100, and the circulation of the liquid 100 stopped by closing the injection valve 105 and the liquid discharge valve 107. This resulted in that a large amount of CO2 was able to be captured in a short time in the case of the vacuum pump 102 installed on the vibration transmission unit 103 compared with the vacuum pump 102 installed on the apparatus platform 124.

Further, the measurement in the case of the vacuum pump 102 installed on the apparatus platform 124 was able to yield such a result that the CO2 capture rate sped up when the installation position of the vacuum pump 102 was changed to a position on the vibration transmission unit 103 in the middle of the measurement.

The present measurement was conducted with the liquid 100 in an uncirculated state, but this is for measurement purpose, and carbon dioxide may be captured continuously by opening the injection valve 105 and the liquid discharge valve 107 and circulating the liquid using a liquid discharge pump 601. The model number of the vacuum pump 102 was used as an example for a measurement experiment, and shall not limit the model number and the type of the vacuum pump 102.

Further, the method for circulating the liquid 100 may be a method that newly injects the liquid 100 after discharging the liquid 100 in the CO2 release tank (storage unit) 101. Alternatively, the method for circulating the liquid 100 may be a method that returns the pressure in the CO2 release tank (storage unit) 101 to the atmospheric pressure in the case where the liquid is discharged, and the present example shall not limit the method for circulating the liquid.

### [Seventh Embodiment]

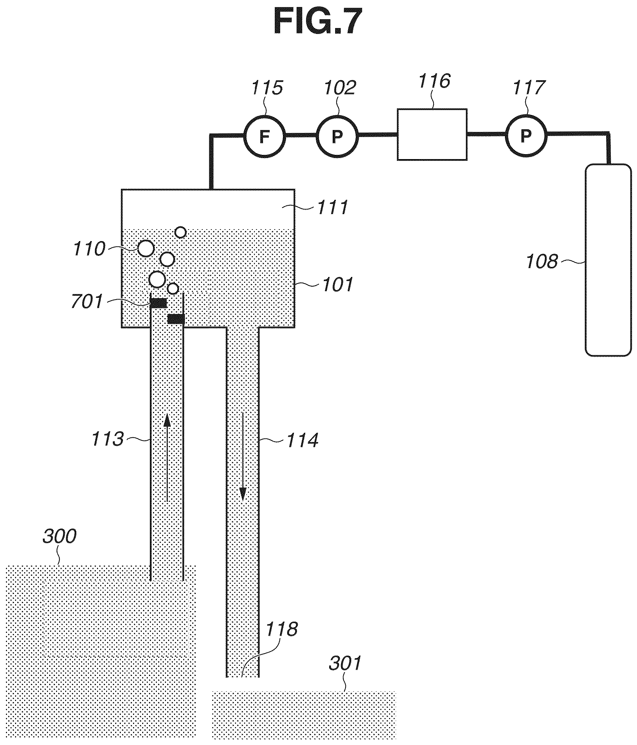

In the following description, an example of a function and configuration of a carbon dioxide capture apparatus according to the present disclosure will be described with reference to Fig. 7.

The present embodiment is configured in such a manner that a vibration generation unit 701 is added to the configuration according to the third embodiment. In the vibration generation unit 701, a structure of reducing the width of the flow path is provided in the liquid supply pipe 113, and a vibration is generated with the aid of a change in the liquid flow. The liquid pressure of the liquid 100 is locally changed by the vibration generation unit 701, and this causes cavitation and/or a water hammer phenomenon, thereby generating a vibration. In other words, the vibration generation unit 701 is characterized by transmitting a vibration generated due to at least one of cavitation and a water hammer phenomenon caused by a local change in the liquid pressure inside the liquid due to a flow of the liquid.

The vibration generated by the vibration generation unit 701 is transmitted to the liquid 100 in the CO2 release tank (storage unit) 101 via the liquid supply pipe 113 serving as the vibration transmission unit. The vibration generation unit 701 is not limited to the present example as long as it can cause a change in the liquid flow to generate a vibration, and the structure of the vibration generation unit 701 may be, for example, a screw propeller, a structure in which a metallic spherical body, a pebble, a piece of wood, or the like floats, marine creatures such as crustaceans and shells, or marine plants such as seaweeds.

The vibration generation unit 701 is formed using a stainless-steel member in the present embodiment, but this example shall not limit the material. The present embodiment has been described assuming that the liquid 100 is river water, the height of the liquid level of the liquid 100 is in such a positional relationship that a liquid level 300 on the liquid supply side is higher than a liquid level 301 on the liquid discharge side, and the carbon dioxide capture apparatus is configured to circulate the liquid 100 based on the siphon principle. However, the carbon dioxide capture apparatus may be configured to circulate seawater using a circulation pump with the seawater having the same height of the liquid level between the liquid level 300 on the liquid supply side and the liquid level 301 on the liquid discharge side.

### [Eighth Embodiment]

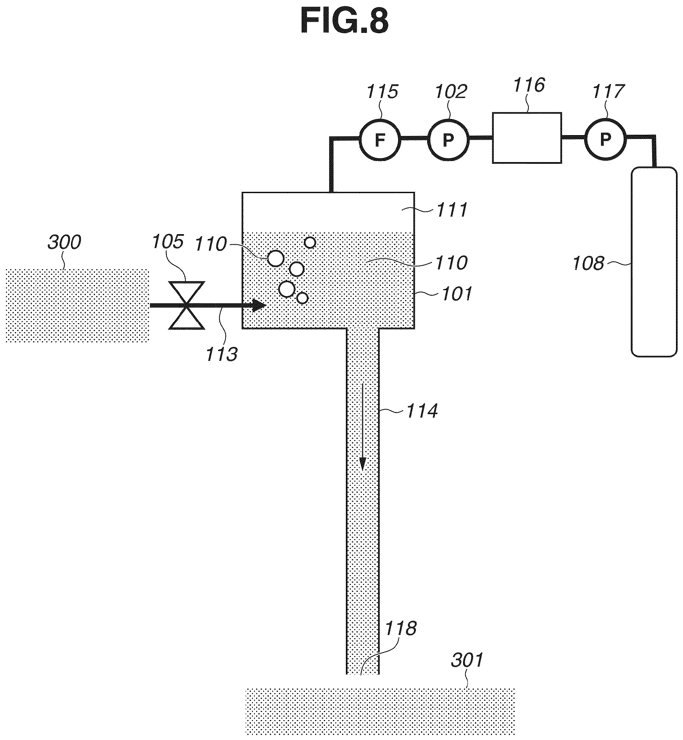

In the following description, an example of a function and configuration of a carbon dioxide capture apparatus according to the present disclosure will be described with reference to Fig. 8.

In the present embodiment, the height of the liquid level of the liquid 100 is in such a positional relationship that the liquid level 300 on the liquid supply side is higher than the liquid level 301 on the liquid discharge side, and the liquid 100 flows due to a difference between the atmospheric pressure and the pressure in the CO2 release tank (storage unit) 101, as compared with the configuration according to the seventh embodiment.

The carbon dioxide capture apparatus is configured to adjust the flow amount of the liquid 100 to be injected into the CO2 release tank (storage unit) 101 using the injection valve 105. A vibration generated due to the liquid 100 passing through the injection valve 105 is transmitted to the liquid 100 in the CO2 release tank (storage unit) 101 via the liquid supply pipe 113 serving as the vibration transmission unit.

The carbon dioxide capture apparatus is configured to cause the liquid 100 in the CO2 release tank (storage unit) 101 to be discharged from the liquid discharge port 118 due to its own weight, but may include an additional circulation assist pump intended for the discharge of the liquid, and discharge the liquid by that.

### [Ninth Embodiment]

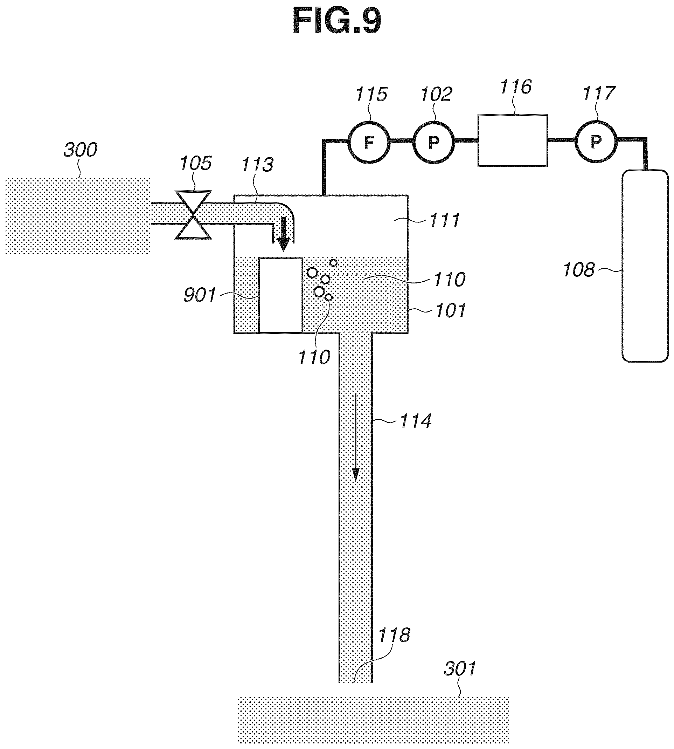

In the following description, an example of a function and configuration of a carbon dioxide capture apparatus according to the present disclosure will be described with reference to Fig. 9.

The present embodiment is configured to cause the liquid 100 injected into the CO2 release tank (storage unit) 101 to collide against a vibration transmission unit 901 to generate a vibration and transmit the vibration to the liquid 100, in addition to the configuration according to the eighth embodiment. The vibration generated by the above-described collision is transmitted to the entire liquid 100 in the CO2 release tank via the liquid 100 in the CO2 release tank (storage unit) 101.

In the present embodiment, the carbon dioxide capture apparatus is configured to cause the injected liquid 100 to collide against the vibration transmission unit 901 to generate a vibration. However, the carbon dioxide capture apparatus may be configured to cause the injected liquid 100 to collide against the liquid 100 present in the CO2 release tank (storage unit) 101, and transmit generated collision energy to the vibration transmission unit 901 via the liquid 100. In other words, the vibration transmission unit 901 may transmit a vibration generated due to the collision of the injected liquid to the liquid staying in the storage unit.

The present invention is not limited to the above embodiments and various changes and modifications can be made within the spirit and scope of the present invention. Therefore, to apprise the public of the scope of the present invention, the following claims are made.

This application claims priority from Japanese Patent Applications No. 2023-094138, filed June 7, 2023, and No. 2024-075197, filed May 7, 2024, which are hereby incorporated by reference herein in their entirety.

## Claims

1. A carbon dioxide capture apparatus comprising:
a storage unit including a partition wall separating an atmosphere and an inner space, the storage unit being configured to store liquid in which carbon dioxide is dissolved in the inner space;
a vibration transmission unit configured to transmit a vibration of the storage unit or a vibration source disposed near the storage unit to the liquid stored in the storage unit; and
an accumulation unit configured to capture and accumulate the carbon dioxide released from the liquid with an aid of the vibration transmitted via the vibration transmission unit.

2. The carbon dioxide capture apparatus according to claim 1, wherein the vibration source is a vacuum pump, a lifting pump, a liquid discharge pump, a hydroelectric power generator, a wind power generator, a propulsion engine of a ship, an engine for power generation, a wave force, or a wind force.

3. The carbon dioxide capture apparatus according to claim 1, wherein the storage unit is supported on a mounting portion via an elastic portion.

4. The carbon dioxide capture apparatus according to claim 1, wherein the inner space of the storage unit is depressurized compared with an atmospheric pressure.

5. The carbon dioxide capture apparatus according to claim 1, further comprising a heating mechanism configured to heat the liquid stored in the storage unit.

6. The carbon dioxide capture apparatus according to claim 1, wherein the liquid stored in the storage unit is discharged due to a weight of the liquid.

7. The carbon dioxide capture apparatus according to claim 1, wherein the storage unit includes a liquid supply port and a liquid discharge port, and the liquid supply port is disposed on an upper side in a direction perpendicular to a liquid level with respect to the liquid discharge port.

8. The carbon dioxide capture apparatus according to claim 7, wherein the liquid in which the carbon dioxide is dissolved is circulated based on a siphon principle.

9. The carbon dioxide capture apparatus according to claim 1, wherein the storage unit has a Torricellian vacuum space created in the inner space.

10. The carbon dioxide capture apparatus according to claim 1, further comprising:
a structure configured to reduce a flow amount, the structure being provided in a liquid supply path for supplying the liquid to the storage unit; and
a liquid discharge mechanism configured to discharge the liquid from the storage unit,
wherein a height of a liquid level of the liquid in the storage unit is lower than a Torricellian vacuum height in the storage unit.

11. The carbon dioxide capture apparatus according to claim 1, wherein the vibration transmission unit is a metal member.

12. The carbon dioxide capture apparatus according to claim 1, wherein the vibration is generated due to at least one of cavitation and a water hammer phenomenon caused by a local change in a liquid pressure inside the liquid due to a flow of the liquid.

13. The carbon dioxide capture apparatus according to claim 1, wherein the vibration is generated due to a collision of an injected liquid against the liquid stored in the storage unit against the liquid stored in the storage unit.

14. A carbon dioxide capture method comprising:
transmitting a vibration of a storage unit or a vibration source disposed near the storage unit to a liquid stored in the storage unit, the storage unit including a partition wall separating an atmosphere and an inner space, the storage unit being configured to store the liquid in which carbon dioxide is dissolved in the inner space; and
capturing and accumulating the carbon dioxide released from the liquid with an aid of the transmitted vibration.
